# FASCICULE DE BREVET EUROPEEN

(11) **EP 3 789 830 B1**
(45) Date de publication et mention de la délivrance du brevet: **03.04.2024**
(21) Numéro de dépôt: 19196181.2
(22) Date de dépôt: 09.09.2019
(51) Int. Cl.: G04C 10/02

(54) **CADRAN ET PROCÉDÉ DE FABRICATION D'UN CADRAN POUR UNE MONTRE**
ZIFFERBLATT UND HERSTELLUNGSVERFAHREN EINES ZIFFERBLATTS FÜR EINE ARMBANDUHR
DIAL AND METHOD FOR MANUFACTURING A DIAL FOR A WATCH

(43) Date de publication de la demande: 10.03.2021
(73) Titulaire: The Swatch Group Research and Development Ltd, 2074 Marin (CH)
(72) Inventeur: IMBODEN, Matthias, 2072 St-Blaise (CH); JORNOD, Alain, 2000 Neuchâtel (CH)
(74) Mandataire: ICB SA

(56) Documents cités:
- US-A- 6 067 277
- US-A1- 2009 129 210
- US-A1- 2012 134 243

## Description

### Domaine Technique

De manière générale, l'invention concerne des cadrans de montre, plus particulièrement des cadrans de montre comprenant une couche photovoltaïque.

### Arrière-plan technologique

Le document JP 2005346934 vise à fournir une cellule solaire sensibilisée par un colorant. Le document propose une cellule solaire 11 sensibilisée par un colorant équipée d'un verre plat supérieur g1, d'un verre plat inférieur g2 faisant face au verre plat supérieur. Une première couche 111 sensibilisée au colorant est disposée dans une première région E1 entre le verre plat supérieur et le verre plat inférieur. Une seconde couche 112 sensibilisée par un colorant est disposée dans une seconde région E2 différente de la première région E1. Les régions E1 et E2 sont situées entre le verre plat supérieur et le verre plat inférieur. La seconde couche 112 a couleur différente de celle de la première couche 111.

Le document JP 2005324517 vise à fournir un dispositif décoratif. Le dispositif décoratif est équipé d'une cellule solaire 11 sensibilisée par un colorant disposée dans une région entre une paire de substrats transmettant la lumière (par exemple une plaque supérieure en verre (g1) et une plaque inférieure en verre (g2)). Une partie décorative 13 est fournie à au moins un de la paire des substrats transmettant la lumière.

La publication scientifique L. Wen et. al, « Theoretical design of multi-colored semi-transparent organic solar cells with both efficient color filtering and light harvesting » Sci. Rep. 4 (2014) rapporte une cellule solaire incorporant une capacité de coloration multiple offrant une solution esthétique et ouvrant la possibilité d'un affichage coloré auto-alimenté. Le document US 6 067 277 A concerne un cadran de montre formé d'une cellule solaire comprenant un premier substrat destiné à être exposé à la lumière et un deuxième substrat portant sur leurs faces opposées des électrodes entre lesquelles est disposé un système physico-chimique capable d'absorber la lumière et de générer une tension électrique aux bornes desdites électrodes, dans lequel ledit premier substrat est formé d'un matériau translucide. Le substrat exposé à la lumière peut également comporter des marquages formant tour d'heure ou autres inscriptions, ces marquages ou inscriptions pouvant être ajoutés ou gravés sur l'une des deux faces du premier substrat.

### Description générale de l'invention

Un cadran est la partie d'une montre qui affiche l'heure au moyen d'un ou plusieurs repères temporels (p. ex. indication d'un nombre (12 ou XII, 60, ...)) et d'aiguilles en mouvement. Dans sa forme la plus élémentaire, la périphérie du cadran est numérotée de 1 à 12 et indique les heures sur un cycle de 12 heures. Une première aiguille fait une révolution toutes les 12 heures. Une seconde aiguille, plus longue que la première aiguille fait une révolution par heure. Un ou plusieurs trous sont ménagés dans le cadran pour le passage d'un ou plusieurs axes des une ou plusieurs aiguilles.

Un premier aspect de l'invention concerne un cadran pour une montre Le cadran comprend une couche photovoltaïque semi-transparente ayant une face inférieure. D'autre part le cadran comprend aussi une couche décorative à base d'encre imprimée sur la face inférieure de la couche photovoltaïque. La couche décorative comprend un motif comprenant un ou plusieurs repères temporels.

On entend par « couche photovoltaïque », une couche qui, exposée à la lumière, produit de l'électricité grâce à l'effet photovoltaïque.

Par couche « semi-transparente », on entend une couche comprenant une ou plusieurs zones transparentes et une ou plusieurs zones opaques, la couche étant, en terme de surface, majoritairement transparente. Préférablement la surface des une ou plusieurs zones transparentes est supérieure à 80%, préférablement comprise dans un intervalle allant de 80% à 95%, de la surface de la couche.

D'une façon générale, on entend par face, surface ou côté « supérieur », « du dessus » ou « haut » d'un objet, la face, surface ou côté de l'objet le plus proche de l'utilisateur de la montre. Il s'agit aussi de la face, surface ou côté de l'objet recevant la lumière incidente. A l'inverse, on entend par face, surface ou côté « inférieur », « du dessous » ou « bas » d'un objet, la face, surface ou côté de l'objet le plus éloigné des yeux de l'utilisateur de la montre (c.-à-d. la face, surface ou côté opposé à la face, surface ou côté supérieur).

Par « encre », on entend un liquide (ou éventuellement une pâte) contenant un ou plusieurs pigments ou un ou plusieurs colorants et servant à colorer une surface afin de produire p. ex. une image, un texte ou un dessin.

Par « repère temporel » on entend tout élément permettant d'inférer l'heure actuelle grâce aux une ou plusieurs aiguilles de la montre (p. ex. indication d'un nombre (12 ou XII, 60, ...) en périphérie du cadran).

Il sera apprécié que la présente invention permette de réduire le nombre de pièces nécessaires au montage du cadran du fait que la couche décorative est imprimée sur la couche photovoltaïque (la couche décorative et la couche photovoltaïque sont solidaires et ne nécessitent pas une solidarisation *in situ* lors du montage de la montre).

Le motif comprend préférablement une première zone comprenant une première encre et une seconde zone comprenant une seconde encre. La première encre et la seconde encre étant différentes. Préférablement la première zone est centrale et la seconde zone est périphérique. Par encre différente, on entend une encre ayant une composition chimique différente d'une autre encre. La couche décorative peut être opaque ou semi-transparente. Elle peut être unie ou comporter plusieurs motifs avec ou sans symétrie. Il sera apprécié qu'une grande liberté est permise au niveau des motifs de décoration.

Selon un mode de réalisation, la couche photovoltaïque semi-transparente comprend un arrangement d'une ou plusieurs cellules photovoltaïques couvrant entre 5% et 20%, préférablement entre 7% et 15%, encore plus préférablement entre 9% et 11% de la surface de couche photovoltaïque. Il sera apprécié que, de cette façon, une majorité de la lumière incidente illumine la couche décorative.

Selon un mode de réalisation, les une ou plusieurs cellules photovoltaïques sont arrangées selon un réseau, le réseau étant préférablement un réseau hexagonal, linéaire, ou triangulaire. Selon un autre mode de réalisation, le réseau est un réseau mixte comprenant au moins deux des réseaux suivants : un réseau hexagonal, un réseau linéaire et un réseau triangulaire. Selon un autre mode de réalisation, le réseau pourrait être irrégulier.

Préférablement, la couche photovoltaïque comprend une sous couche protectrice (éventuellement transparente ou semi-transparente), la sous couche protectrice étant la couche inférieure de la couche photovoltaïque et étant en contact avec la couche décorative.

Selon un mode de réalisation préféré, le cadran comprend une couche transparente brillante disposée entre la couche photovoltaïque semi-transparente et la couche décorative.

Selon un mode de réalisation préféré, la couche photovoltaïque comprend un matériau actif ayant une sensibilité différente selon la longueur d'onde de la lumière incidente. La couche décorative est configurée pour réfléchir la lumière incidente à une longueur d'onde substantiellement égale à un maximum de sensibilité du matériau actif. Préférablement, la couche décorative est configurée pour réfléchir la lumière incidente à une longueur d'onde comprise dans un intervalle allant de -150 nm à 150 nm, plus préférablement dans un intervalle allant de -100 nm à 100 nm, encore plus préférablement dans un intervalle allant de -50 nm à 50 nm centré sur un maximum de sensibilité du matériau actif.

Par « sensibilité » d'un matériau actif photovoltaïque à une longueur d'onde, on entend la capacité de ce matériau à absorber une onde incidente à cette longueur d'onde et la transformer, par effet photovoltaïque, en énergie électrique.

Un second aspect de l'invention concerne un procédé de fabrication d'un cadran pour une montre. Le procédé comprend la mise à disposition d'une couche photovoltaïque semi-transparente ayant une face inférieure. Le procédé comprend, en outre, l'application d'une couche décorative à base d'encre sur la face inférieure de la couche photovoltaïque. La couche décorative comprend un motif comprenant un ou plusieurs repères temporels.

Selon un mode de réalisation, l'application de la couche décorative est réalisée par impression.

Selon un mode de réalisation préféré, l'application de la couche décorative est réalisée par impression digitale. Le motif peut être appliqué selon un plan d'application enregistré dans une imprimante digitale réalisant l'impression digitale.

Préférablement, l'impression est réalisée par une imprimante UV à plat (« UV flatbed printer » en anglais).

Selon un mode de réalisation, le procédé comprend l'application d'une couche transparente brillante, la couche supérieure de finition étant appliquée au entre la couche photovoltaïque semi-transparente et la couche décorative.

Un troisième aspect de l'invention concerne une montre comprenant le cadran selon le premier aspect de l'invention.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
Fig. 1: une coupe transversale d'un cadran d'une montre selon un mode de réalisation préféré de l'invention ;
Fig. 2: une vue d'un cadran d'une montre montrant un motif décoratif ainsi qu'un réseau d'une cellule photovoltaïque à un ou plusieurs segments selon un mode de réalisation de l'invention un trou pour les axes des aiguilles étant visible au centre du cadran ;
Fig. 3: une vue d'un cadran d'une montre montrant un autre motif décoratif selon un mode de réalisation de l'invention ;
Fig. 4: un graphique représentant l'intensité à tension nulle d'un premier échantillon selon un mode de réalisation de l'invention en fonction de l'illuminance reçue par l'échantillon, selon un mode de réalisation de l'invention ;
Fig. 5: un graphique représentant l'intensité à tension nulle d'un second échantillon selon un mode de réalisation de l'invention en fonction de l'illuminance reçue par l'échantillon, selon un mode de réalisation de l'invention ;
Fig. 6: une simulation (ray tracing) montrant l'augmentation de l'éclairement de la couche photovoltaïque par rétrodiffusion de la lumière à l'interface verre-couche décorative imprimée ;
Fig. 7: un graphique représentant l'augmentation relative de l'éclairement de la couche photovoltaïque en fonction du facteur de remplissage surfacique ; et
Fig. 8: un graphique représentant la sensibilité du matériau actif en fonction de la longueur d'onde de la lumière incidente utilisé dans un cadran selon un mode de réalisation préféré de l'invention.

L'attention du lecteur est attirée sur le fait que les dessins ne sont pas à l'échelle. En outre, pour des raisons de clarté, les proportions entre hauteur, longueur et/ou largeur peuvent ne pas être correctement représentées.

### Description détaillée d'un mode de réalisation préféré de l'invention

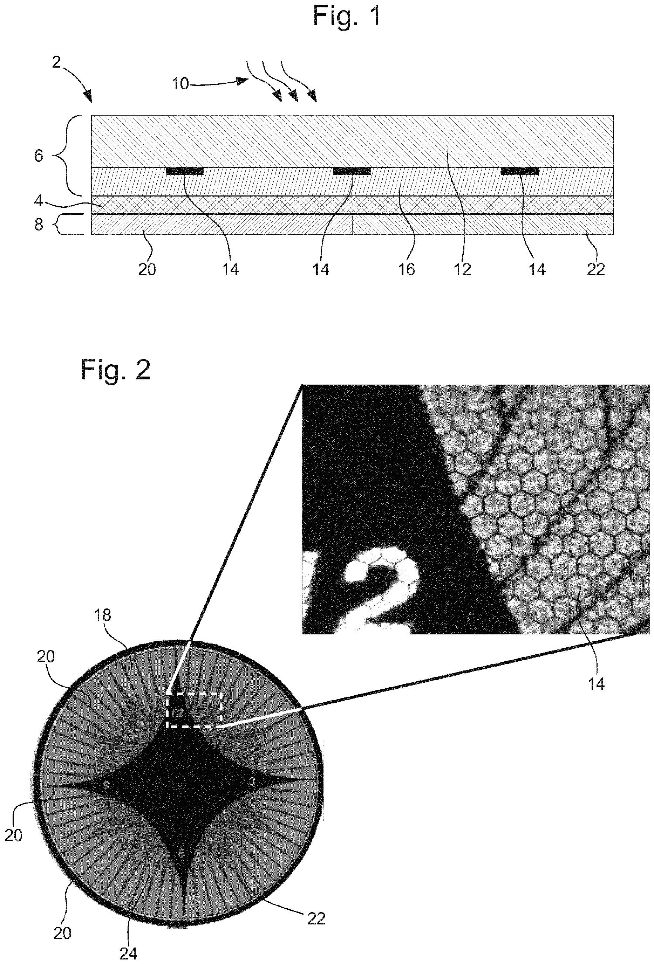

La Fig. 1 montre une coupe transversale d'un cadran 2 d'une montre selon un mode de réalisation préféré de l'invention. Le cadran 2 comprend, du haut vers le bas du cadran, une couche photovoltaïque semi-transparente 6, une couche transparente brillante 4 et une couche décorative 8. On entend par haut du cadran la partie la plus proche des yeux de l'utilisateur de la montre. La couche la plus en haut est aussi la couche traversée en premier par la lumière incidente 10.

Avec référence aux Figs. 1 et 2, la couche photovoltaïque semi-transparente 6 comprend une sous-couche de verre 12 transparente, une ou plusieurs cellules photovoltaïques 14 arrangées selon un réseau hexagonal et une sous couche protectrice 16. La sous-couche protectrice 16 stabilise structurellement le réseau hexagonal de cellules photovoltaïques 14 et le protège contre d'éventuels chocs. La sous-couche protectrice 16 est en contact direct avec la couche transparente brillante 4, en particulier, la face inférieure de la sous-couche protectrice 16 de la couche photovoltaïque est en contact direct avec la couche supérieure de la couche transparente brillante 4.

Le matériau actif utilisé pour les une ou plusieurs cellules photovoltaïques 14 est basé sur du silicium amorphe. Il sera cependant apprécié que selon d'autres modes de réalisation, le matériau actif peut être différent.

Il sera aussi apprécié que selon d'autres modes de réalisation, la sous-couche de verre 12 transparente peut être remplacée par une sous-couche d'un autre matériau transparent (éventuellement partiellement transparent) comme p. ex. du saphir ou du plastique.

Préférablement le réseau hexagonal de cellules photovoltaïques 14 couvre entre 5% et 20%, préférablement entre 7% et 15%, encore plus préférablement entre 9% et 11% de la surface de couche photovoltaïque. Il sera apprécié que, de cette façon, une majorité de la lumière incidente 10 illumine la couche décorative 8.

La couche décorative 8 est appliquée à la couche photovoltaïque semi-transparente 6, par impression digitale. La couche décorative 8 comprend un motif 18 comprenant plusieurs repères temporels 20. La couche décorative 8 peut être colorée p. ex. en noir, blanc, jaune, violet, etc., et éventuellement comprendre des zones transparentes. Il sera apprécié que l'impression digitale procure une grande flexibilité quant aux motifs imprimés. L'impression peut être réalisée par une imprimante UV à plat (« UV flatbed printer » en anglais). Le motif peut être appliqué selon un plan d'application enregistré dans une imprimante digitale réalisant l'impression digitale.

Il sera apprécié que le motif peut comprendre une pluralité de zones comprenant différentes encres. En particulier, selon un mode de réalisation préféré, la couche décorative 8 peut comprendre une première zone 22 comprenant une première encre et une seconde zone 24 comprenant une seconde encre. La première encre et la seconde encre sont différentes dans le sens où elles ont p. ex. une autre composition chimique et/ou une autre couleur. Les repères temporels 20 peuvent par exemple être indiqués par la seconde zone 24.

La couche transparente 4, est placée entre la couche photovoltaïque semi-transparente 6 et la couche décorative 8. La couche transparente 4 peut améliorer l'interface entre l'encre de la couche décorative et la couche photovoltaïque 6, p. ex. en cas d'incompatibilité physique et/ou chimique entre l'encre de la couche décorative 8 et la couche photovoltaïque 6.

Un premier exemple de motif est illustré à la Fig. 2. La couche décorative 8 comprend une première zone 22 centrale noire. La première zone 22 comprend quatre repères temporels indiqués chacun par une pointe associée aux nombres « 12 », « 3 », « 6 » et « 9 » indiqués en blanc. La première zone 22 est entourée par une zone périphérique 24 de couleur violette. Le motif de la zone périphérique 24 comprend aussi des repères temporels sous forme d'une rosace dont les pointes sont séparées entre elle d'un 60^{ème} de révolution.

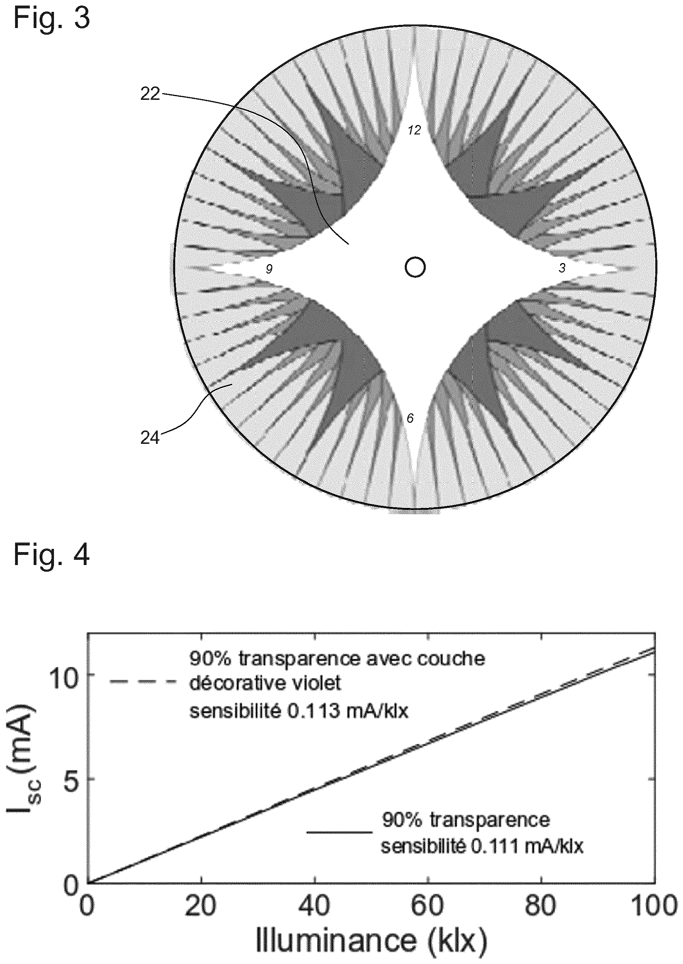

Un second exemple de motif est illustré à la Fig. 3. Le second exemple est identique au premier à l'exception du choix des couleurs. En particulier, la première zone 22 centrale est sans encre, semi-transparente (les nombres étant de couleur noire) et la seconde zone 24 périphérique est de couleur jaune.

### Exemples

La couche photovoltaïque semi-transparente comprend un réseau d'une ou plusieurs cellules photovoltaïques couvrant 10% de la surface de couche photovoltaïque. L'impression de la couche décorative est réalisée par une imprimante UV à plat.

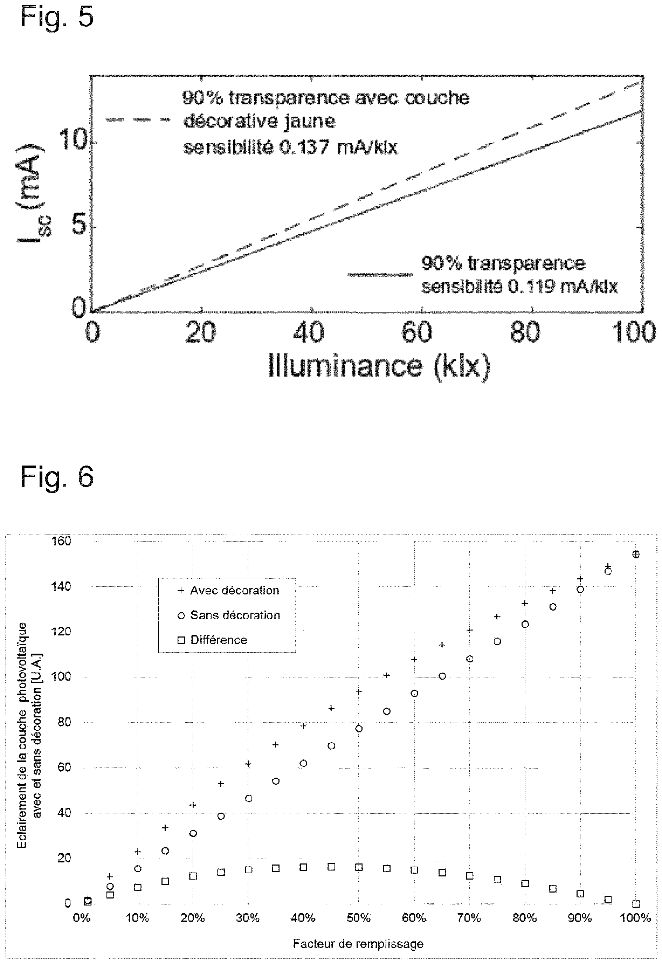

L'intensité à tension nulle Isc est proportionnelle à l'illuminance reçue par l'échantillon. Les graphiques illustrés aux Figs. 4 et 5 représentent des résultats typiques de l'intensité à tension nulle Isc en fonction de l'illuminance. La Fig. 4 correspond à la comparaison entre un échantillon avec (ligne interrompue) ou sans (ligne pleine) couche décorative noire et violette comprenant un réseau hexagonal de cellules photovoltaïques couvrant 10% de la surface de la couche photovoltaïque. Les pentes obtenues sont respectivement 0.113 mA/klx et 0.111 mA/klx. La Fig. 5 correspond à la comparaison entre un échantillon avec (ligne interrompue) ou sans (ligne pleine) couche décorative jaune comprenant un réseau hexagonal de cellules photovoltaïques couvrant 10% de la surface de la couche photovoltaïque Les pentes obtenues sont respectivement 0.137 mA/klx et 0.119 mA/klx.

Il apparait que l'intensité à tension nulle Isc n'est que peu affectée par l'application d'une couche décorative violette, elle est même augmentée d'environ 2%. Dans le cas de l'application d'une couche décorative jaune, l'intensité à tension nulle Isc a elle, augmenté de 15%.

Il s'ensuit que selon les couleurs choisies pour la couche décorative, le rendement photovoltaïque peut être amélioré. L'amélioration est due à la lumière rétrodiffusée à l'interface verre-couche imprimée et subissant des réflexions multiples à l'intérieur de la sous-couche de verre. La lumière ainsi réfléchie améliore le rendement puisqu'une partie supplémentaire de la lumière incidente parvient sur les une ou plusieurs cellules photovoltaïques. En l'absence de couche décorative, cette partie supplémentaire est perdue car elle n'est pas réfléchie et de ce fait n'arrive pas sur les une ou plusieurs cellules photovoltaïques.

La Fig. 6 montre les résultats d'une simulation (Ray Tracing Simulation) pour un échantillon sans couche décorative (cercles) et avec couche décorative blanche (croix). La lumière incidente 10 est caractérisée par un spectre solaire. La couche décorative blanche est modélisée par une surface lambertienne sans absorption. Le graphique représente l'éclairement de la couche photovoltaïque 14 en fonction du facteur de remplissage surfacique compris entre 1% et 100%.. La différence entre les deux échantillons est représentée par des carrés.

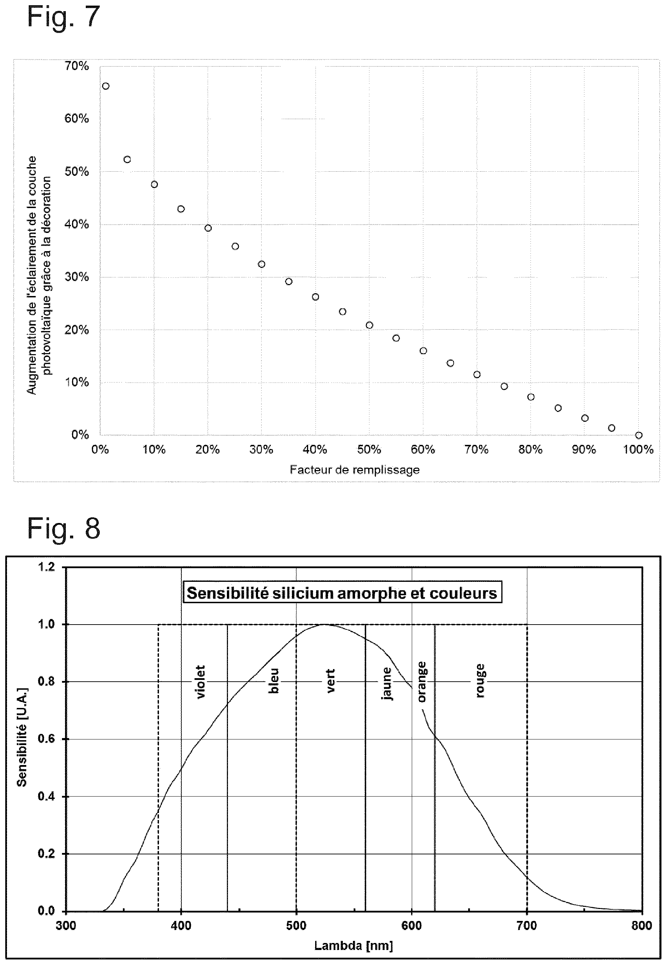

La Fig. 7 représente l'augmentation relative de la lumière incidente sur la couche photovoltaïque 14 en fonction du facteur de remplissage surfacique compris entre 1% et 100%. Cette courbe représente l'augmentation maximale de l'illumination sur les couches photovoltaïques due à la lumière rétrodiffusée à l'interface verre-couche imprimée et subissant des réflexions multiples à l'intérieur de la sous-couche de verre puisque dans ces simulations, une absorption nulle de la couche décorative 8 et du verre 12 a été considérée.

La Fig. 8 représente la courbe de sensibilité du matériau actif (silicium amorphe) en fonction de la longueur d'onde de la lumière incidente. Sur la même figure, les couleurs visibles sont aussi représentées en fonction de la longueur d'onde. Selon la courbe, la sensibilité maximale (1 en unités arbitraires) du matériau actif se situe à environ 525 nm (vert). La sensibilité du matériau à la couleur jaune est d'environ 0.9 (c.-à-d. 90% de la sensibilité maximale du matériau actif). La sensibilité du matériau à la couleur violette est d'environ 0.55 (c.-à-d. 55% de la sensibilité maximale du matériau actif). Il s'ensuit donc qu'il est plus bénéfique de réfléchir de la lumière généralement jaune (c.-à-d. avoir une couche décorative généralement jaune) que de réfléchir de la lumière généralement violette (c.-à-d. avoir une couche décorative généralement violette) dans le cas du silicium amorphe.

D'autre part, il s'ensuit que le rendement peut être augmenté par l'augmentation de la proportion de la surface de couleur blanche (réflexion de substantiellement toutes les couleurs composant la lumière incidente) par rapport à la surface totale de la couche décorative ou par l'augmentation de la proportion de couleurs dont la longueur d'onde est proche du maximum de sensibilité spectrale du matériau actif (450 à 600 nm, bleu à orange dans le cas du silicium amorphe).

Il est évident pour l'homme du métier, sur base du présent document, que l'augmentation du rendement selon les couleurs pourrait différer pour d'autres matériaux actifs.

L'emploi d'encres fluorescentes, absorbant hors du maximum de sensibilité et émettant proche du maximum de sensibilité du matériau actif, pourrait aussi améliorer le rendement. Dans l'exemple du silicium amorphe, le choix pourrait se porter sur une encre absorbant dans le domaine ultraviolet et émettant dans le domaine visible. Préférablement, l'émission de cette fluorescence pourrait se faire à une longueur d'onde comprise dans un intervalle allant de -150 nm à 150 nm centré sur un maximum de sensibilité du matériau actif.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention. Par conséquent, les agencements et/ou procédés spécifiques décrits ci-dedans sont censés être donnés uniquement à titre d'illustration, sans intention de limiter la portée de l'invention.

## Revendications

1. Un cadran (2) pour une montre, comprenant :
une couche photovoltaïque semi-transparente (6) comprenant une ou plusieurs zones transparentes et une ou plusieurs zones opaques, la couche étant, en terme de surface, majoritairement transparente, ladite couche (6) ayant une face inférieure ; et
une couche décorative (8) à base d'encre imprimée sur la face inférieure de la couche photovoltaïque (6), la couche décorative (8) comprenant un motif (18), le motif (18) comprenant un ou plusieurs repères temporels (20).

2. Le cadran (2) selon la revendication 1, dans lequel le motif (18) comprend une première zone (22) comprenant une première encre et une seconde zone (24) comprenant une seconde encre, la première encre et la seconde encre étant différentes.

3. Le cadran (2) selon l'une quelconque des revendications 1 à 2, dans lequel la couche photovoltaïque semi-transparente (6) comprend un arrangement d'une ou plusieurs cellules photovoltaïques (14) couvrant entre 5% et 20%, préférablement entre 7% et 15%, encore plus préférablement entre 9% et 11% de la surface de couche photovoltaïque (6).

4. Le cadran (2) selon la revendication 3, dans lequel les une ou plusieurs cellules photovoltaïques (14) sont arrangées selon un réseau.

5. Le cadran (2) selon la revendication 4 dans lequel le réseau est un réseau hexagonal, linéaire, ou triangulaire.

6. Le cadran (2) selon la revendication 4 dans lequel le réseau est un réseau mixte comprenant au moins deux des réseaux suivants : un réseau hexagonal, un réseau linéaire et un réseau triangulaire.

7. Le cadran (2) selon l'une quelconque des revendications 1 à 6, dans lequel la couche photovoltaïque (6) comprend une sous couche protectrice (16), la sous couche protectrice (16) étant la couche inférieure de la couche photovoltaïque (6).

8. Le cadran (2) selon l'une quelconque des revendications 1 à 6, comprenant une couche transparente (4) brillante, la couche transparente (4) étant disposée entre la couche photovoltaïque semi-transparente (6) et la couche décorative (8).

9. Le cadran (2) selon l'une quelconque des revendications 1 à 8, dans lequel la couche photovoltaïque (6) comprend un matériau actif ayant une sensibilité différente selon la longueur d'onde de la lumière incidente (10), dans lequel la couche décorative (8) est configurée pour réfléchir la lumière incidente (10) à une longueur d'onde substantiellement égale à un maximum de sensibilité du matériau actif.

10. Un procédé de fabrication d'un cadran (2) pour une montre, comprenant :
la mise à disposition d'une couche photovoltaïque semi-transparente (6) comprenant une ou plusieurs zones transparentes et une ou plusieurs zones opaques, la couche étant, en terme de surface, majoritairement transparente, ladite couche (6) ayant une face inférieure ;
l'application d'une couche décorative (8) à base d'encre sur la face inférieure de la couche photovoltaïque (6), la couche décorative (8) comprenant un motif (18), le motif (18) comprenant un ou plusieurs repères temporels (20).

11. Le procédé de fabrication selon la revendication 10, dans lequel l'application de la couche décorative (8) est réalisée par impression, préférablement par impression digitale.

12. Le procédé de fabrication selon l'une quelconque des revendications 10 à 11, dans lequel l'application de la couche décorative (8) est réalisée par impression digitale, dans lequel le motif (18) est appliqué selon un plan d'application enregistré dans une imprimante digitale réalisant l'impression digitale.

13. Le procédé de fabrication selon l'une quelconque des revendications 11 à 12, dans lequel l'impression est réalisée par une imprimante UV à plat.

14. Le procédé de fabrication selon l'une quelconque des revendications 10 à 13, comprenant l'application d'une couche transparente (4) brillante, la couche supérieure de finition étant appliquée entre la couche photovoltaïque semi-transparente (6) et la couche décorative (8).

15. Montre comprenant le cadran (2) selon l'une quelconque des revendications 1 à 9.

## Patentansprüche

1. Ein Zifferblatt (2) für eine Uhr, umfassend:
eine halbtransparente photovoltaische Schicht (6) mit einem oder mehreren transparenten Bereichen und einem oder mehreren opaken Bereichen, wobei die Schicht flächenmäßig überwiegend transparent ist, wobei die Schicht (6) eine Unterseite aufweist; und
eine dekorative Schicht (8) auf Tintenbasis, die auf die Unterseite der photovoltaischen Schicht (6) gedruckt ist, wobei die dekorative Schicht (8) ein Muster (18) umfasst, wobei das Muster (18) einen oder mehrere Zeitmarker (20) umfasst.

2. Zifferblatt (2) nach Anspruch 1, wobei das Muster (18) einen ersten Bereich (22) mit einer ersten Tinte und einen zweiten Bereich (24) mit einer zweiten Tinte umfasst, wobei die erste Tinte und die zweite Tinte unterschiedlich sind.

3. Zifferblatt (2) nach einem der Ansprüche 1 bis 2, wobei die halbtransparente photovoltaische Schicht (6) eine Anordnung aus einer oder mehreren photovoltaischen Zellen (14) umfasst, die zwischen 5 % und 20 %, vorzugsweise zwischen 7 % und 15 %, noch bevorzugter zwischen 9 % und 11 % der Fläche der photovoltaischen Schicht (6) abdeckt.

4. Zifferblatt (2) nach Anspruch 3, wobei die eine oder mehreren Solarzellen (14) in einem Array angeordnet sind.

5. Zifferblatt (2) nach Anspruch 4, wobei das Gitter ein hexagonales, lineares oder dreieckiges Gitter ist.

6. Zifferblatt (2) nach Anspruch 4, wobei das Netz ein gemischtes Netz ist, das mindestens zwei der folgenden Netze umfasst: ein hexagonales Netz, ein lineares Netz und ein dreieckiges Netz.

7. Zifferblatt (2) nach einem der Ansprüche 1 bis 6, wobei die photovoltaische Schicht (6) eine schützende Unterschicht (16) umfasst, wobei die schützende Unterschicht (16) die unterste Schicht der photovoltaischen Schicht (6) ist.

8. Zifferblatt (2) nach einem der Ansprüche 1 bis 6, umfassend eine glänzende transparente Schicht (4), wobei die transparente Schicht (4) zwischen der halbtransparenten photovoltaischen Schicht (6) und der dekorativen Schicht (8) angeordnet ist.

9. Zifferblatt (2) nach einem der Ansprüche 1 bis 8, wobei die photovoltaische Schicht (6) ein aktives Material mit einer unterschiedlichen Empfindlichkeit in Abhängigkeit von der Wellenlänge des einfallenden Lichts (10) umfasst, wobei die dekorative Schicht (8) so konfiguriert ist, dass sie das einfallende Licht (10) bei einer Wellenlänge reflektiert, die im Wesentlichen gleich einem Maximum der Empfindlichkeit des aktiven Materials ist.

10. Herstellungsverfahren eines Zifferblatts (2) für eine Uhr, das Folgendes umfasst:
Bereitstellen einer halbtransparenten photovoltaischen Schicht (6), die einen oder mehrere transparente Bereiche und einen oder mehrere opake Bereiche umfasst, wobei die Schicht flächenmäßig überwiegend transparent ist, wobei die Schicht (6) eine Unterseite aufweist;
Aufbringen einer dekorativen Schicht (8) auf Tintenbasis auf die Unterseite der photovoltaischen Schicht (6), wobei die dekorative Schicht (8) ein Muster (18) umfasst, wobei das Muster (18) einen oder mehrere Zeitmarker (20) umfasst.

11. Herstellungsverfahren nach Anspruch 10, wobei das Aufbringen der dekorativen Schicht (8) durch Drucken, vorzugsweise durch Digitaldruck, erfolgt.

12. Herstellungsverfahren nach einem der Ansprüche 10 bis 11, wobei das Aufbringen der dekorativen Schicht (8) durch Digitaldruck erfolgt, wobei das Muster (18) gemäß einem in einem Digitaldrucker, der den Digitaldruck durchführt, gespeicherten Aufbringungsplan aufgebracht wird.

13. Herstellungsverfahren nach einem der Ansprüche 11 bis 12, wobei das Drucken mit einem UV-Flachbettdrucker durchgeführt wird.

14. Herstellungsverfahren nach einem der Ansprüche 10 bis 13, umfassend das Aufbringen einer glänzenden transparenten Schicht (4), wobei die obere Deckschicht zwischen der halbtransparenten photovoltaischen Schicht (6) und der dekorativen Schicht (8) aufgebracht wird.

15. Uhr umfassend den Zifferblatt (2) nach einem der Ansprüche 1 bis 9.

## Claims

1. A dial (2) for a watch, comprising:
a semi-transparent photovoltaic layer (6) comprising one or more transparent area and one or more opaque area, the layer being, in terms of surface area, predominantly transparent, said layer (6) having a lower face; and
an ink-based decorative layer (8) printed on the lower face of the photovoltaic layer (6), the decorative layer (8) including a pattern (18), the pattern (18) comprising one or more time markers (20).

2. The dial (2) according to claim 1, wherein the pattern (18) comprises a first area (22) including a first ink and a second area (24) including a second ink, the first ink and the second ink being different.

3. The dial (2) according to any of claims 1 to 2, wherein the semi-transparent photovoltaic layer (6) includes an arrangement of one or more photovoltaic cells (14) covering between 5% and 20%, preferably between 7% and 15%, still more preferably between 9% and 11% of the photovoltaic cell (6) surface.

4. The dial (2) according to claim 3, wherein the one or more photovoltaic cells (14) are arranged in an array.

5. The dial (2) according to claim 4, wherein the array is a hexagonal, linear, or triangular array.

6. The dial (2) according to claim 4, wherein the array is a mixed array comprising at least two of the following arrays: a hexagonal array, a linear array and a triangular array.

7. The dial (2) according to any of claims 1 to 6, wherein the photovoltaic layer (6) includes a protective sublayer (16), the protective sublayer (16) being the lower layer of the photovoltaic layer (6).

8. The dial (2) according to any of claims 1 to 6, comprising a shiny transparent layer (4), the transparent layer (4) being arranged between the semi-transparent photovoltaic layer (6) and the decorative layer (8).

9. The dial (2) according to any of claims 1 to 8, wherein the photovoltaic layer (6) comprises an active material having a different sensitivity according to the wavelength of the incident light (10), wherein the decorative layer (8) is configured to reflect the incident light (10) at a wavelength substantially equal to maximum sensitivity of the active material.

10. A method for manufacturing a watch dial (2), comprising:
providing a semi-transparent photovoltaic layer (6) comprising one or more transparent area and one or more opaque area, the layer being, in terms of surface area, predominantly transparent, said layer (6) having a lower face;
applying an ink-based decorative layer (8) to the lower face of the photovoltaic layer (6), the decorative layer (8) including a pattern (18), the pattern (18) comprising one or more time markers (20).

11. The manufacturing method according to claim 10, wherein the decorative layer (8) is applied by printing, preferably by digital printing.

12. The manufacturing method according to any of claims 10 to 11, wherein the decorative layer (8) is applied by digital printing, wherein the pattern (18) is applied in accordance with an application plan stored in a digital printer performing the digital printing.

13. The manufacturing method according to any of claims 11 to 12, wherein the printing is performed by a UV flatbed printer.

14. The manufacturing method according to any of claims 10 to 13 including the application of a shiny transparent layer (4), the top finish layer being applied between the semi-transparent photovoltaic layer (6) and the decorative layer (8).

15. Watch including the dial (2) according to any of claims 1 to 9.
